# EUROPEAN PATENT APPLICATION

(11) **EP 2 830 072 A1**
(43) Date of publication of application: **28.01.2015**
(21) Application number: 13460049.3
(22) Date of filing: 24.07.2013
(51) Int. Cl.: H01F 27/34, H02G 15/20, H01B 17/00

(54) **An electrical lead through connector**

(71) Applicant: ABB Technology AG, 8050 Zürich (CH)
(72) Inventor: Florkowski, Marek, 31-216 Krakow (PL); Piasecki, Wojciech, 30-611 Krakow (PL)
(74) Representative: Chochorowska-Winiarska, Krystyna

(57) **Abstract**

The subject of the invention is an electrical lead through connector (1) for connecting MV or HV conductor (7) with a load (4) placed in a tank containing a dielectric liquid or dielectric gas. An electrical lead through connector (1) comprises a plug-in bushing member (5) made of insulation material, where a series filtering choke (6) is embedded. The filtering choke (6) has a first terminal (6a) which is electrically connected with an external HV or MV line (7) and has a second terminal (6b) which is connected to a load (4) placed inside the tank (3). The lead through connector (1) is further provided with an additional bushing member (9) which is mechanically connected with the plug-in bushing member (5) through a common insulating base (8). The additional bushing member (9) is equipped with a conductor (10) located inside the bushing member (9), where the conductor (10) is connected with the second terminal (6b) of the filtering choke (6) and with an additional protective component (11) against electrical surges. The additional bushing member (9) and the plug-in bushing member (5) together with the base (8) constituting a one single element.

## Description

The subject of the invention is an electrical lead through connector for connecting MV or HV conductor with a load placed in a tank containing a dielectric liquid or dielectric gas.

Power equipment, such as transformers, reactors, and motors is typically protected against electrical surges by shunt-connected surge arresters and/or surge capacitors or RC snubbers. Recently new concept of high du/dt transients suppression by means of a series-connected RL choke has been developed. In the particular applications the optimum performance of the RL choke often requires combining it with and additional, shunt-connected capacitor and a surge arrester downstream the choke element. Such a solution is depicted in a publication:
Glinkowski, M., Piasecki, W. , Florkowski, M., Arauzo, F., " SmartChoke-protecting power equipment from fast transients", IEEE PES Transmission and Distribution Conference, Chicago, USA, 2008. These additional components can not be connected outside the protected equipment, when the series-connected choke element is integrated within the bushing, which is a cost-efficient solution.

Utilising a series-choke within a bushing and a shunt-connected protective element at the same time would require either an additional bushing, or locating the second element within the enclosure of the protected device e.g. within the transformer tank

The inventive electrical lead through connector is located in a cover of a tank of an electrical equipment where the tank containing a dielectric liquid or dielectric gas and it comprising a plug-in bushing member made of insulation material, where a series filtering choke is embedded. The filtering choke has a first terminal which is electrically connected with an external HV or MV line and has a second terminal which is connected to a load placed inside the tank. The essence of the invention is that it is further provided with an additional bushing member which is mechanically connected with the plug-in bushing member through a common insulating base and the additional bushing member is equipped with a conductor located inside the bushing member. The conductor is connected with the second terminal of the filtering choke and with a first terminal of an additional protective component against electrical surges, whose second terminal is grounded. The additional bushing member and the plug-in bushing member together with the base constituting a one single element.

Preferably the additional bushing member is an air-insulated bushing type.

Alternatively the additional bushing member is a plug-in bushing type.

Preferably the additional protective component has a form of surge suppressing elements: such as a surge arrester, a surge capacitor, a R-C scrubber or their combination.

Preferably the insulation material for the plug-in bushing, the base and the additional bushing member is a thermosetting resin.

Alternatively the insulation material for the plug-in bushing member, the base and the additional bushing member is a phenolic compound.

The present invention allows one to combine the benefits of using a series choke located within the bushing with the possibility of connecting a surge capacitor and/or surge arrester in a single element. The filtering capabilities of the choke located in the bushing can thus be efficiently enhanced by an additional, shunt-connected protective component.

The connector according to the present invention is fabricated using a single manufacturing process (epoxy resin molding), therefore the manufacturing cost is similar to the manufacturing of a conventional bushing. Additionally this approach allows one to build a compact device which could be mounted on a cover of small transformers, where space is limited. The case in which the additional bushing member is of the plug-in type allows one to maintain the benefits of a touch-proof transformer cover.

The present invention is presented in an exemplary embodiment in the drawing, where:
Fig.1 shows an inventive device in a cross section in the first embodiment,
Fig.2 shows an inventive device in a cross section in the second embodiment,

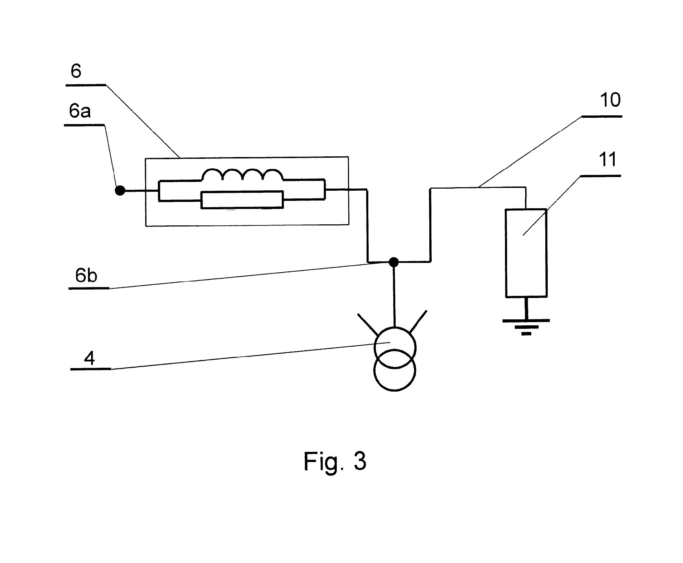

Fig.3 shows a schematic electric diagram of the inventive device,

An electrical lead through connector 1 is placed in a cover 2 of a tank 3 of an electrical load 4 such as transformer which is located in an environment of a dielectric liquid or gas. The connector 1 has a form of plug-in bushing member 5 made from an insulation material, where a series filtering choke 6 is embodied. The series filtering choke 6 has a first terminal 6a, which is electrically connected with an external HV or MV line 7, and a second terminal 6b electrically connected to the load 4. The plug-in bushing member 5 has an insulating material base 8 which is integrated with an additional bushing member 9 which is mechanically connected with the plug-in bushing member 5. Inside the additional bushing member 9 an electrical conductor 10 is inserted. The conductor 10 is connected with the second terminal 6b of the filtering choke 6 and with a first terminal of an additional protective component 11 against electrical surges, whose second terminal is grounded. The plug-in member 5 and the additional bushing member 9 together with the base 8 constituting a one single element of the lead trough connector 1 which is connected with the protective component 11.

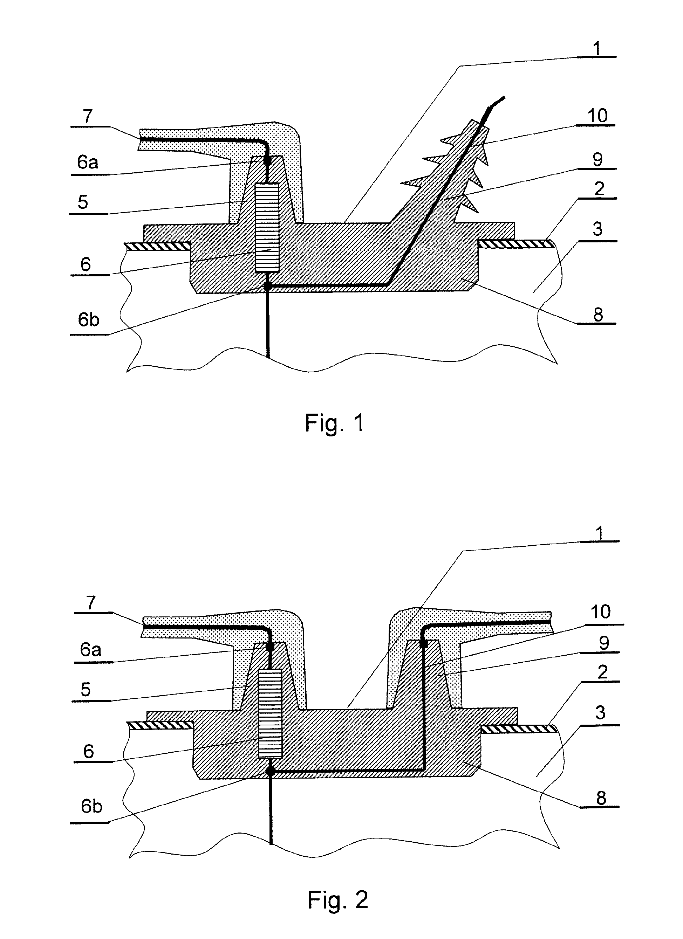

In the first embodiment of the invention the additional bushing member 9 has a form of an air-insulated bushing what is presented in fig.1.

In the second embodiment of the invention the additional bushing member 9 has a form of a plug-in bushing type what is presented in fig.2.

In the both embodiments of the invention the electrical conductor 10 is connected with the load 4 through the terminal 6b and with the protective component 11. The protective component 11 has a form of surge suppressing elements such as a surge arrester, or a surge capacitor or a R-C snubber. It is possible that any of the surge suppressing elements depicted above are combined one with the other and a such combination can constituting the protective component 11. The insulating material of the plug-in bushing 5, the busing member 9 and the common base 8 for through connector 1 is a thermosetting resin or a phenolic compound.

### Operation

In case of a transient overvoltage (surge) in the system, characterized by high rate of rise (du/dt), the surge may penetrate the structure of the electrical load, such as the winding of a transformer. Such events are known to pose a risk of electrical failure as the surge can cause a local overvoltage within the winding, leading to insulation break-down.

When the electrical load is protected by a combination of a series filtering choke (6), and shunt-connected additional protective component (11), the amplitude and the rate of rise (du/dt) of the surge are lowered, and thus the potential negative impact of the transient on the electrical load, such as a transformer is significantly reduced.

## Claims

1. An electrical lead through connector (1) located in a cover (2) of a tank (3) of an electrical equipment where the tank (3) containing a dielectric liquid or dielectric gas; comprising a plug-in bushing member (5) made of insulation material, where a series filtering choke (6) is embedded; the filtering choke (6) whose first terminal (6a) is electrically connected with an external HV or MV line (7) and whose second terminal (6b) is connected to a load (4) placed inside the tank (3) **characterised in that**:
it is further provided with an additional bushing member (9) which is mechanically connected with the plug-in bushing member (5) through a common insulating base (8); the additional bushing member (9) is equipped with a conductor (10) located inside the bushing member (9), where the conductor (10) is connected with the second terminal (6b) of the filtering choke (6) and with an additional protective component (11) against electrical surges, and where the additional bushing member (9) and the plug-in bushing member (5) together with the base (8) constituting a one single element.

2. A connector according to claim 1, **characterised in that** the additional bushing member (9) is an air-insulated bushing type.

3. A connector according to claim 1, **characterised in that** the additional bushing member (9) is a plug-in bushing type.

4. A connector according to claims 1-3, **characterised in that** the additional protective component (11) has a form of surge suppressing elements such as a surge arrester (11a, 11b), or a surge capacitor (11c) or a R-C snubber (11d) or their combination.

5. A connector according to any previous claims, **characterised in that** the insulation material for the plug-in bushing (5), the base (8) and the additional bushing member (9) is a thermosetting resin.

6. A connector according to any previous claims, **characterised in that** the insulation material for the plug-in bushing member (5), the base (8) and the additional bushing member (9) is a phenolic compound.
